Europäisches Patentamt

(19) European Patent Office

Office européen des brevets

(11) Publication number: **0 030 113**
**B1**

# (12) EUROPEAN PATENT SPECIFICATION

(45) Date of publication of patent specification: **06.02.85**

(51) Int. Cl.⁴: **G 11 B 27/34**

(21) Application number: **80304212.6**

(22) Date of filing: **24.11.80**

(54) **Recording-time mode detector and video tape recorder or reproducer including such a detector.**

(30) Priority: **24.11.79 JP 152324/79**
**21.03.80 JP 36676/80**
**03.07.80 JP 91486/80**

(43) Date of publication of application:
**10.06.81 Bulletin 81/23**

(45) Publication of the grant of the patent:
**06.02.85 Bulletin 85/06**

(84) Designated Contracting States:
**DE FR GB NL**

(56) References cited:
**DE-A-2 636 600**
**DE-A-2 722 126**
**FR-A-2 344 926**
**FR-A-2 401 573**
**GB-A- 995 011**
**US-A-3 212 076**
**US-A-3 412 385**
**US-A-3 573 360**
**US-A-3 681 523**
**US-A-3 764 896**

(73) Proprietor: **Matsushita Electric Industrial Co., Ltd.**
**1006, Oaza Kadoma**
**Kadoma-shi Osaka-fu, 571 (JP)**

(72) Inventor: **Igata, Kouichi**
**E-204 1-9-5 Nasuzukuri**
**Hirakata-shi Osaka-fu (JP)**
Inventor: **Kobayashi, Masaaki**
**1-17-2 Uguisudai**
**Kawanishi-shi Hyogo-ken (JP)**

(74) Representative: **Crawford, Andrew Birkby et al**
**A.A. THORNTON & CO. Northumberland House**
**303-306 High Holborn**
**London WC1V 7LE (GB)**

(56) References cited:
**US-A-4 044 389**
**US-A-4 151 566**

**IBM TECHNICAL DISCLOSURE BULLETIN, vol. 15, no. 12, May 1973 ARMONK, N.Y. (US) E.F. DUMSTORFF et al.: "Digital Speed Checking Circuit" page 3842**

Courier Press, Leamington Spa, England.

EP 0 030 113 B1

## Description

This invention relates to a recording timing mode detector, and to a multi-speed video tape recording reproducing apparatus including such a detector.

Recently, video tape recorders (VTR), which have switchable multiple recording time modes, have been developed using high density recording techniques. These VTR's have two or three recording time modes that is to say standard time play (S.P.), long time play (L.P.) and super long time play. When reproducing, these VTR's must detect the recording time mode automatically to avoid disturbance of reproduced pictures. The recording time mode detector needs quick operation. The detector needs to operate at variable reproducing speeds.

One such apparatus has previously been proposed in U.S. 4,044,389 which provides a video recorder/reproducer with a tape speed measuring circuit which identifies the speed at which the recording was made to allow automatic swtiching to the correct speed upon playback. The circuit measures the ratio of control track frequency relative to capstan tachometer frequency to obtain the recorded tape speed. This apparatus is sensitive to drop outs which affect the reproduction of the control track signals.

The present invention provides a multi-speed video tape recording/reproducing apparatus utilizing a magnetic tape having video information and control signals recorded thereon including a control signal indicative of a video frame, and having a magnetic tape driving means comprising a capstan, and a recording time mode detector for detecting the recording time mode of the video information recorded on said magnetic tape, said recording time mode detector comprising:

a reproducing head for reproducing said control signals recorded on said magnetic tape;

a frequency generator operatively mechanically connected to said capstan for providing a signal indicative of the number of rotations of said capstan;

a counter for counting the number of pulses output by said frequency generator during a video frame, a clock input (CK) of said counter being connected to said frequency generator and a reset input (R) of said counter being connected to said reproducing head; and

a decoder and storage device operatively connected to said reproducing head and said counter for detecting and storing the recording time mode of said magnetic tape by detecting the count in said counter during one video frame; characterised in that

there is provided a dropout detector for detecting a dropout of said control signals recorded on said magnetic tape and for inhibiting resetting of said counter until the time that said reproducing head reproduces the following control signal.

Advantages of this invention will be apparent upon considering the following detailed descriptions of embodiments thereof when taken together with the accompanying drawings, wherein:

Fig. 1 is a block diagram of an embodiment of a video tape recording/reproducing apparatus;

Fig. 2 shows signals appearing at various points of Fig. 1; and

Fig. 3 shows signals appearing at various points of Fig. 1 when control signals are dropped.

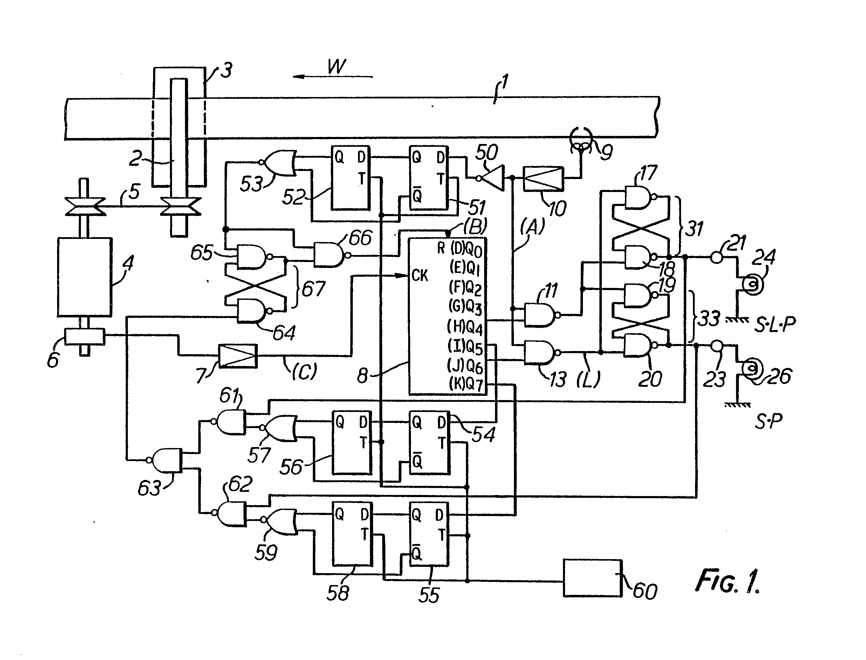

Now, a preferred embodiment of this invention will be described. Referring to Fig. 1, a magnetic tape is driven by a capstan 2 and a pinchroller 3 in the direction indicated by the arrow W. Recorded video signals are reproduced by rotating video heads (not indicated) which are mounted on a rotating disk (not indicated). The capstan 2 is driven by a capstan motor 4 through a belt 5. A frequency generator 6 detects the number of rotations of the capstan motor 4.

The number of output pulses is proportional to the running speed of the magnetic tape 1. The output pulses are amplified by an amplifier 7 and are supplied to an input terminal CK of a counter 8. A control head 9 reproduces control signals which are recorded on the magnetic tape 1. The control signal is recorded on the magnetic tape 1 at the rate of one per frame (1/30 sec). The reproduced control signals are amplified by an amplifier 10 and supplied to NAND gates 11 and 13. The amplified control signals are also inverted by an inverter 50 and are supplied to a D terminal of a D FF 51. The Q terminal of the D FF 51 is connected to a D terminal of another D FF 52. The $\bar{Q}$ terminal of the D FF 51 is connected to a NOR gate 53. The Q terminal of the D FF 52 is connected to the NOR gate 53 also and the output of the gate 53 is fed to one input of a NAND gate 66 whose output is fed to the reset terminal R of the counter 8. The output pulses of the output terminals $Q_4$ and $Q_6$ of the counter 8 are supplied to the NAND gates 11 and 13.

NAND gates 17 and 18 make up an R-S Flip-flop 31 NAND gates 19 and 20 make up an R-S Flip-flop 33. The output pulses of the NAND gate 11 are supplied to the S terminal of the Flip-flop 31 and to the R terminal of the Flip-flop 33. The output pulses of the NAND gate 13 are supplied to the S terminal of Flip-flop 33 and the R terminal of the Flip-flop 31.

The S terminal of one of the R-S Flip-flops is connected to the R terminal of the other R-S Flip-flop. As a result, the output pulses of one of the R-S Flip-flops are High level and the output pulses of the other R-S Flip-flop become Low level. The output terminals of the R-S Flip-flops 31, 33 are connected to the terminals 21, 23. When the level of the terminal 21 is High, reproducing mode S.L.P. is recognized and a lamp 24 turns on. When the level of the terminal 23 is High, reproducing mode S.P. is recognized and a lamp 26 turns on. Light emitting diodes can be used for these lamps 24 and 26.

The $Q_5$ and $Q_7$ terminals of the counter 8 are connected to D terminals of D FF 54 and 55 respectively. The Q terminal of the D FF 54 is connected to the D terminal of a D FF 56. The $\bar{Q}$ terminal of the D FF 54 is connected to a NOR gate 57. The Q terminal of the D FF 56 is connected to the NOR gate 57, too. The $\bar{Q}$ terminal of the D FF 55 is connected to the D terminal of a D FF 58. The $\bar{Q}$ terminal of the D FF 55 is connected to a NOR gate 59. The Q terminal of the D FF 58 is connected to the NOR gate 59, too. Clock signals of a clock signal generator 60 are supplied to the R terminals of D FF 54, 55, 56, 58, 51 and 52. For example, the clock signal generator 60 is constructed of a oscillator. Inputs of an NAND gate 61 are connected to the output of the NOR gate 57 and the output of the R-S FF 31. Inputs of a NAND gate 62 are connected to the outputs of the NOR gate 59 and the Q output of the R-S FF 33. The NAND gates 61 and 62 are connected a NAND gate 63. The output signals of the NAND gate 63 are supplied to a NAND gate 64 which is connected to a NAND gate 65 to form an RS-FF 67. The output signals of the NOR gate 53 are supplied to the NAND gate 65 of the RS-FF 67 and, as described above, to the NAND gate 66. The $\bar{Q}$ terminal of the R-S FF 67 is connected to the NAND gate 66. The output signals of the NAND gate 66 are supplied to the R terminal of the counter 8.

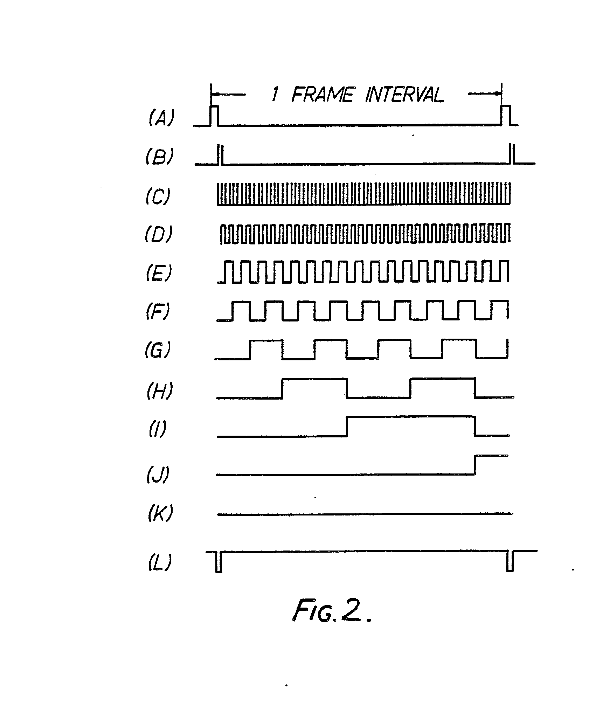

Fig. 2 shows signals of various points during S.P. mode reproduction. The levels of signals are indicated either High or Low. Fig. 2-(A) shows control signals which are reproduced by the control head 9. The interval of the control signals is one frame at normal speed. Fig. 2-(B) shows reset signals of the counter 8. The reset signals which are the back edges of the control signals are supplied by the NAND gate 66. Fig. 2-(C) shows the output pulses of frequency generator 6 which detects the number of rotations of the capstan motor 4. The output pulses feed to the CK terminal of the counter 8. Fig. 2-(D), (E), (F), (G), (H), (I), (J), (K) show output pulses of terminals $Q_0$, $Q_1$, $Q_2$, $Q_3$, $Q_4$, $Q_5$, $Q_6$, $Q_7$ of the counter 8. Fig. 2-(L) shows the output of the NAND gate 13.

The number of pulses during control signals are constant always. During slow motion reproduction, the interval of control signals is longer than the interval during normal mode reproduction. And the frequency of the frequency generator 6 is lower than the frequency during normal mode reproduction.

Then, in the standard play (S.P.) mode, the interval of control signals contains 72 pulses of the frequency generator 6. The output signals (D)—(K) of the output terminals $Q_0$—$Q_6$ which is shown in Fig. 2 repeat at the control signal period. The upper bits (H), and (J) of the counter 8 are supplied to the NAND gates 11 and 13. The control signals (A) are supplied to another input terminal of the NAND gates 11 and 13.

In Standard Play (S.P.) mode 72 pulses are counted between control signals, the output signal of $Q_6$ is High and the signal shown in Fig. 2-(B) is supplied to the output terminal of GATE 13. As the output signals of $Q_4$ is low, the output signals of NAND gate 11 keeps High.

In Super Long Play (S.L.P.) mode, 24 pulses are counted between control signals. In S.L.P. mode, signal 2-(B) is obtained by NAND gate 11.

In S.P. mode, the signal shown in Fig. 2-(B) sets the R-S flip-flop circuit (FF) 33 and resets the R-S FF 31. Then the output terminal 23 voltage of the R-S FF 33 becomes High level and the light emitting diode 26 for S.P. mode is turned on.

S.L.P. mode is detected the same way. When recording, the running distances of the magnetic tape 1 is unit time are different in S.P. mode and S.L.P. mode. So in this invention, the reproducing mode is automatically detected by counting the pulses which are reset by the control signal of the frequency generator 6.

In this description, S.P. mode has 72 pulses between control signals. In S.L.P. mode, the recording time is three times thereof the normal mode, the number of pulses is 24 between control signals.

As the recording mode is detected every frame, the detecting speed and the detecting accuracy are high. As the number of pulses of the frequency generator 6 is constant in one recording mode, the mode can be detected during slow motion reproduction or fast motion reproduction or variable speed reproduction and so on. A magnetic flux responsive head can be used for the control head 9. By using the flux responsive head, control signals can be detected just prior in order to stop the magnetic tape 1. The mode can be detected at just prior to stop.

In the above description, the recording mode can be detected with high speed and high accuracy.

Further, the recording mode can be detected having no connection with tape reproduction speed.

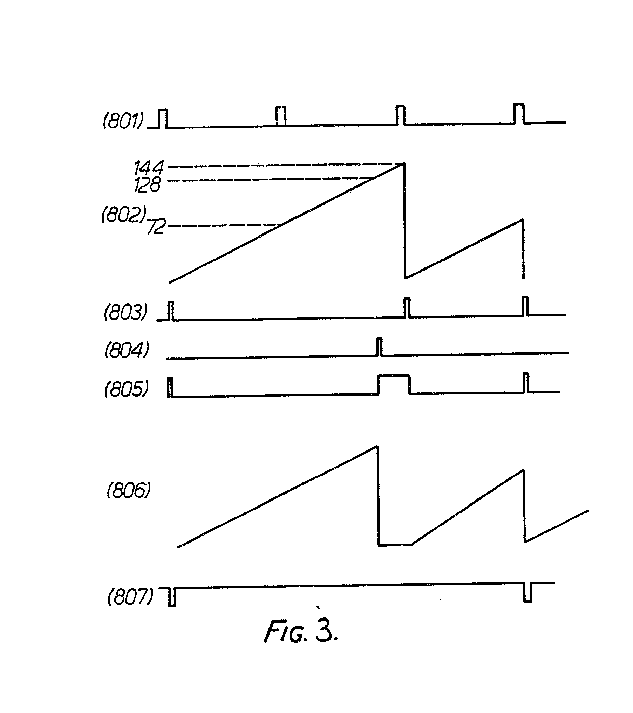

Fig. 3 shows the timing when one control signal cannot be reproduced due to a dropout. Some cracks of the tape 1 or dust on the tape 1 may cause the dropout. Fig. 3-801 shows the reproduced control signals and one dropout. The dropout is shown by a dotted line.

Fig. 3-802 shows converted analog signals which are output signals of $Q_0$—$Q_7$ of the counter 8 of the same timing shown Fig. 3-801.

Fig. 3-803 shows the reset signals of the counter 8. The signals have one dropout, too. By this dropout, the counter cannot reset at 72 pulses and counts toward the next control signal. Fig. 3-802 shows that the counter counts 144 pulses. By this miscount, the NAND gate 11 supplies LOW signal and the system detects S.L.P. mode in spite of S.P. mode. Some times many dropouts occur. But this system detects the turning to High of the upper bit of the counter 8 when a dropout occurs. The turning to High is detected by the D FFs 55, 58 and the NOR gate 59. In S.L.P. mode, the turning to High is detected by the D FF 54, 56 and the NOR gate 57. The turning to High is selected by NAND gates 61 and 62 accordance with recording mode.

In the above description, the counter 8 is reset at the first control signal after dropout and miscount cannot occur.

## Claims

1. A multi-speed video tape recording/reproducing apparatus utilizing a magnetic tape having video information and control signals recorded thereon including a control signal indicative of a video frame, and having a magnetic tape driving means comprising a capstan (2), and a recording time mode detector for detecting the recording time mode of the video information recorded on said magnetic tape, said recording time mode detector comprising:

a reproducing head (9) for reproducing said control signals recorded on said magnetic tape (1);

a frequency generator (6) operatively mechanically connected to said capstan (2) for providing a signal indicative of the number of rotations of said capstan (2);

a counter (8) for counting the number of pulses output by said frequency generator (6) during a video frame, a clock input (CK) of said counter (8) being connected to said frequency generator (6) and a reset input (R) of said counter (8) being connected to said reproducing head (9); and

a decoder and storage device (11, 13, 17 to 20) operatively connected to said reproducing head (9) and said counter (8) for detecting and storing the recording time mode of said magnetic tape by detecting the count in said counter (8) during one video frame; characterised in that there is provided a dropout detector (54—65) for detecting a dropout of said control signals recorded on said magnetic tape (1) and for resetting of said counter (8) when said reproducing head (9) reproduces the following control signal after the dropout of the preceding control signal.

2. Apparatus according to claim 1, wherein the dropout detector (54—65) is arranged to detect dropout of a control signal by the turning High of the uppermost bit of said counter (8).

## Revendications

1. Appareil d'enregistrement et de reproduction de bande vidéo à plusieurs vitesses utilisant une bande magnétique sur laquelle sont enreigstrés une information vidéo et des signaux de commande comportant un signal de commande indicatif d'une image complète vidéo, et possédant un moyen d'entraînement de bande magnétique, comprenant un cabestan (2), et un détecteur de mode de durée d'enregistrement servant à détecter le mode de durée d'enregistrement de l'information vidéo enregistrée sur ladite bande magnétique, ledit détecteur de mode de durée d'enregistrement comprenant:

une tête de reproduction (9) servant à reproduire lesdits signaux de commande enregistrés sur ladite bande magnétique (1);

un générateur de fréquence (6) mécaniquement relié audit cabestan (2) de façon à produire un signal indiquant le nombre de rotations dudit cabestan (2);

un compteur (8) servant à compter le nombre d'impulsions délivrées par ledit générateur de fréquence (6) pendant une image complète vidéo, une entrée d'horloge (CK) dudit compteur (8) étant connectée audit générateur de fréquence (6) et une entrée de repositionnement (R) dudit compteur (8) étant connectée à ladite tête de reproduction (9); et

un dispositif de décodage et d'emmagasinage (11, 13, 17 à 20) connecté à ladite tête de reproduction (9) et audit compteur (8) de manière à détecter et à emmagasiner le mode de durée d'enregistrement de ladite bande magnétique en mesurant la valeur de comptage contenue dans ledit compteur (8) pendant une image complète vidéo; caractérisé en ce qu'il est prévu un détecteur de lacune (54—65) servant à détecter une lacune desdits signaux de commande enregistrés sur ladite bande magnétique (1) et à repositionner ledit compteur (8) lorsque ladite tête de reproduction (9) reproduit le signal de commande suivant après la lacune du signal de commande précédent.

2. Appareil selon la revendication 1, où le détecteur de lacune (54—65) est conçu pour détecter la lacune d'un signal de commande à partir du passage au niveau haut du bit de l'ordre le plus élevé dudit compteur (8).

## Patentansprüche

1. Videoband-Aufnahme- und -Abspielgerät mit mehreren Bandgeschwindigkeiten, das ein Magnetband mit darauf aufgenommenen Videoinformationen und Steuersignalen einschließlich eines Steuersignales, das einen Bildrehmen angibt, verwendet und eine Magnetbandantriebseinrichtung aufweist, enthaltend eine Treibwelle (2) und einen Aufnahmegeschwindigkeitsdetektor zum Ermitteln der Aufnahmegeschwindigkeit der auf dem Magnetband aufgenommenen Videoinformation, wobei dieser Aufnahmegeschwindigkeitsdetektor enthält:

einen Wiedergabekopf (9) zum Abspielen der auf dem Magnetband (1) aufgenommenen Steuersignale;

einen Frequenzgenerator (6), der mechanisch wirkungsmäßig mit der Bandwelle (2) verbunden ist, um ein Signal bereitzustellen, das für die Umdrehungszahl der Bandwelle (2) kennzeichnend ist;

einen Zähler (8) zum Zählen der Anzahl der Impulse, die von dem Frequenzgenerator (6) während eines Bildrahmens abgegeben werden, wobei ein Takteingang (CK) des Zählers (8) mit dem Frequenzgenerator (6) verbunden ist und ein Rücksetzeingang (R) des Zählers (8) mit dem Wiedergabekopf (9) verbunden ist; und

eine Dekodier- und Speichereinrichtung (11, 13, 17 bis 20), die wirkungsmäßig mit dem Wiedergabekopf (9) und dem Zähler (8) verbunden ist, um die Aufnahmegeschwindigkeit des Magnetbandes zu ermitteln und zu speichern, indem das Zählergebnis in dem Zähler (8) während eines Bildrahmens ermittelt wird; dadurch gekennzeichnet, daß ein Abfalldetektor (54 bis 65) zum Ermitteln eines Abfalls des auf dem magnetband (1) aufgenommenen Steuersignals und zum Rücksetzen des Zählers (8), wenn der Wiedergabekopf (9) das nachfolgende Steuersignal nach dem Abfall des vorausgehenden Steuersignals abspielt, vorgesehen ist.

2. Gerät nach Anspruch 1, bei dem der Abfalldetektor (54 bis 65) dazu angeordnet ist, den Abfall eines Steuersignals durch das Hochstellen des obersten Bit des Zählers (8) zu ermitteln.

Fig. 1.

FIG. 2.

FIG. 3.